# EUROPEAN PATENT SPECIFICATION

(11) **EP 2 403 216 B1**
(45) Date of publication and mention of the grant of the patent: **05.03.2014**
(21) Application number: 10290359.8
(22) Date of filing: 30.06.2010
(51) Int. Cl.: H04L 29/06, H04L 29/08, H04L 12/28, G06F 9/445

(54) **Method for installation of an application**
Verfahren zur Installation einer Anwendung
Procédé d'installation d'une application

(43) Date of publication of application: 04.01.2012
(73) Proprietor: Alcatel Lucent, 75007 Paris (FR)
(72) Inventor: Michielsens, Jan, 2240 Zandhoven (BE); Justen, Pascal, 1150 Sint-Pieters-Woluwe (BE)
(74) Representative: ALU Antw Patent Attorneys

(56) References cited:
- EP-A1- 1 850 527
- EP-A1- 2 184 903
- WO-A1-2009/049325

## Description

The present invention relates to a method for installation of an application and a customer device and server and mapping device realizing such method.

Such method and network elements are already known in the art.

Indeed, it has to be explained that the DSL-Forum defines for example a Customer Premises Equipment Wide Area Network Management Protocol, shortly called the WAN Management Protocol in the Technical Report TR069. This TR069 Management Protocol is intended for communication between Customer Premises Equipment and an Auto-configuration Server, shortly called an ACS i.e. such as an above mentioned server. An ACS is an auto-configuration server, as the component in a broadband network responsible for auto-configuration of the CPE for advance services. An CPE is the Customer Premises Equipment i.e. the above mentioned customer device, which is capable of being managed by an ACS. A RPC is a Remote Procedure Call whereby a "parameter" defines a name-value pair representing a manageable CPE parameter that is made accessible to an ACS for reading/or writing. An Object defines a data-model that describes a number of related parameters i.e. a data-structure consisting of data-fields; and related methods together with their interactions. In this way a data model supports data and computer systems by providing the definition and format of data-objects.

In such a remote procedure call environment downloading of a new service i.e. installation of a new application is possible by means of a user interaction that uses e.g. a web-portal. Indeed, the solutions today make use of an application store i.e. an end-user has to use his computer to log-in on a web portal and by clicking on an icon, the desired application will be installed and activated. Such solutions make use of an application store i.e. an end-user has to use his computer to log-in on a web-portal and by clicking on an icon, the desired application ***will*** be installed and activated. However, in many cases, there is no computer available or, for security reasons, the applications vendor doesn't provide a way to access new applications or to enable automatic application installation i.e. the installation of the application requires a number of interactions of the buyer/end-user.

Another solution to install new applications is by means of a plug-n-play-alike framework. The physically bought hardware is plugged-in hardware might be automatically recognized by the system, which on its turn may trigger the download of the appropriate application. However, this method is based on an identifier which identifies the application and or the hardware device, but which does not identify the user i.e. the installation of the application is not providing a unique link with its buyer.

Since, today a lot of software and hardware is still sold via real stores and also more and more software is linked together with hardware-components, such as sensors and its appliances, the following problems when buying a new application via a real store can be listed:
- how can the software application or hardware application be linked in a unique way with its buyer?
- how can the software application or hardware application be installed and managed in a way that the installation process does not cause too much interactions for the buyer and the service provider?

Since a lot of software applications and hardware applications are still sold via such a real store, a solution is required to overcome the above indicated issues during the installation of such an application that is bought via a real store.

The WO 2009/049325 A1 (PIE Digital INC (US); Barn John A (US) 16 april 2009, describes a system and method for automatic configuration and management of home network devices. A system implements automated configuration and maintenance of devices and their peripherals that connect to the home network, in particular the establishment of a distributed system that serves as a service platform which facilitates automated discovery and initial and ongoing deployment of home networks and the devices that interact with or connect to their network automatically or through manual means.

The European Application with number EP1850527A1 (Koninkl. KPN NV (NL) 31 October 2007, describes configuring devices and services on a residential gateway. Hereby the residential gateway receives a signal from a data carrier, which signal triggers the residential gateway to start configuring the devices or the service on the gateway. The gateway receives information-date from the data carrier which comprises information about the device or the service to be configured. A configuration message, which comprises information about the device or the service to be configured, is sent from the gateway to a configuration server over a service provider. Configuration data is received and stored in the residential gateway, thereby enabling usage of the device or the service o the residential gateway.

An object of the present invention is to provide a method for installation of an application and a customer device and server and mapping device realizing such a method, of the above known type but wherein the above mentioned problems do not arise.

According to the invention, this object is achieved due to the fact that the method for installation of an application at a customer device by a server in a remote procedure call protocol environment comprises applying a proximity based interaction at the device and providing thereby by the customer device interaction information; and by retrieving by means of a retriever, based upon this interaction information, an application identification, from a proximity server; and by forwarding by means of a first forwarder an initiation message towards the server that comprises the application identification for initiating the installation; and by finally installing by an installer of the server, upon reception of the initiation message, and according to the remote procedure call protocol, the application according to the application identification, on the customer device.

By combining the use of a proximity based interaction upon the device and the use of a remote procedure call protocol between the device and the server, the above mentioned problems are solved.

Indeed, a remote procedure call protocol, such as the TR-069 management protocol, is a protocol that allows for zero-touch activation and management of devices and life cycle management of applications. Via the TR-069 management protocol, a device and the end-user behind that device, including the references towards applications that are running on that device can be uniquely defined.

On the other hand, a proximity based interaction, is a very cost efficient way to uniquely identify an end-point such as a software component or a hardware component. In the event when a proximity transceiver is bought in a store and delivered and linked to such a component, as part of a sell to an end-user or subscriber, the proximity transceiver represent in fact that component by means of an unique serial number. By linking the proximity based interaction to the remote procedure call protocol environment, a link towards the end-user who bought the component is established.

It has to be explained that devices and methods for the activation of a service are already know in the art. This is e.g. described in the *European Patent Application with ref.* EP 2 134 114 A1 *with short title "Method for providing to an end device access to a service, to an end device and to a mobile terminal realizing such a method" with date of publication 16.12.2009*. Therein, a method for communicating between a server device and a customer device in a proximity based interaction environment is described. The method comprises interacting between a first proximity transceiver being associated to the customer device and a second proximity transceiver. The two transceivers are thereby generating interaction information.

Such a customer device can be implemented by means of an end-user device, set-up box, Residential Gateway, Home Gateway, etc.....

Such a proximity based interaction environment is described in paragraph 12 of that application i.e. it can be defined as all interaction means and method where physical closeness of objects, devices or persons are involved. Proximity-based interaction can be based on radio-frequency detection or communication, RFID, NFC, IR, computer-vision, capacitive detection, light sensors, ... The also used terminology touch-based interaction should be regarded as a sub-set of Proximity based interaction. In addition RFID technology referred herein is intended to also include Near Field Communication, Electronic Product Code global and related technologies and that the tag and tag-reader mentioned for the implementation of this RFID technology can be replaced by barcodes, IR communication, image recognition and the like.

In the referred application, the proximity technology is used to trigger, either via the first transceiver or either via the second transceiver, a transfer server that requests a service manager to provide to the customer device access to a particular service. Different examples are described whereby a third example is given in paragraph 16 where a trigger in the proximity environment of a Residential Gateway instructs a Home Device Manager (i.e. an Auto configuration Server) to activate e.g. a user's firewall. According to this example, the "touched" Residential Gateway forwards this trigger to a Subscription Transfer Server which contacts on its turn a User Subscription Database before instructing the Home Device Manager. According to this third example, it is clear that the method is enabled to activate/deactivate such a present service i.e. an installed application. However, that known method is not providing an automatic zero-touch and save installation of a new application on the respective end-user device.

When linking the two technologies together a link is established between the new application that needs to be installed, the device on which the new application should be deployed and the end-user that bought the application in a store by means of such a proximity transceiver.

The main basic idea of this automated installation and eventual activation of a new application on a device is using a proximity based interaction in a remote procedure call protocol environment. The result of a translation, which is executed at an association data-base i.e. the proximity server, of interaction information such as e.g. the proximity transceiver identification into the application identification, is pushed on the device. The network element that knows the association between the interaction information and the application issues the necessary commands to the auto-configuration server to install and to eventually activate the required application on the desired home device.

In stead of providing e.g. a CDROM with an application and a software-key, the interaction information allows for automatic download of the complete software bundle of the new application and for automatic licensing of the new application without any end-user or subscriber intervention.

As mentioned above, a possible implementation is realized by implementing the remote procedure call protocol with a version of the TR069 Management protocol.

Another characteristic feature of the present invention is that the method further comprises forwarding, the mentioned interaction information, by a second forwarder of the customer device towards a server receiver of the server, by means of interchanged values for parameters of a proximity-object which is defined according to the remote procedure call protocol for such interaction. Indeed, by defining such a proximity-object, customer device identification and interaction information is interchanged according to an efficient and secure way. By defining such a proximity-object the proximity based interaction is immediately integrated in the secure remote procedure call protocol.

A further implementation is realized when an association between the customer device identification, the interaction information and the application identification is stored in a mapping device. Such a mapping device is convenient for use during installation of an application at a customer device by a server in such remote procedure call protocol environment. Due to the present remote procedure call protocol, it is possible to comprise in the mapping device a memory for storing the customer device identification. However, such a mapping device can be further enabled, according to the present invention, to store also in the memory an application identification that identifies the application, whereby the application identification was retrieved from the proximity server based upon the interaction information provided by the proximity based interaction at the device.

Furthermore, the mapping device can be equipped with a retriever to retrieve by itself the application identification from the proximity server.

Also a first forwarder can be comprised in the mapping device to forward such an initiation message for the server for initiating the respective installation.

Alternatively, the mapping device can execute as well the step of retrieving as the step of forwarding the initiation message. This is realized by comprising the retriever and the first forwarder in the mapping device. In this way the mapping device fulfills in fact a kind of role of application broker.

It has to be remarked that the above mentioned data to be stored in the memory can be stored in relation and correlation to subscriber identification. Indeed, since subscriber identification can be learned by the server such as an auto configuration server from the Operation Support System, this subscriber identification can be stored as well in the memory in relation to the customer device identification and the interaction information.

A further characteristic feature of the present basic idea is that the retriever is comprised in the server whereby the step of retrieving is executed by the server.

Finally, the above mentioned server can be implemented by comprising such above described mapping device.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', used here below, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

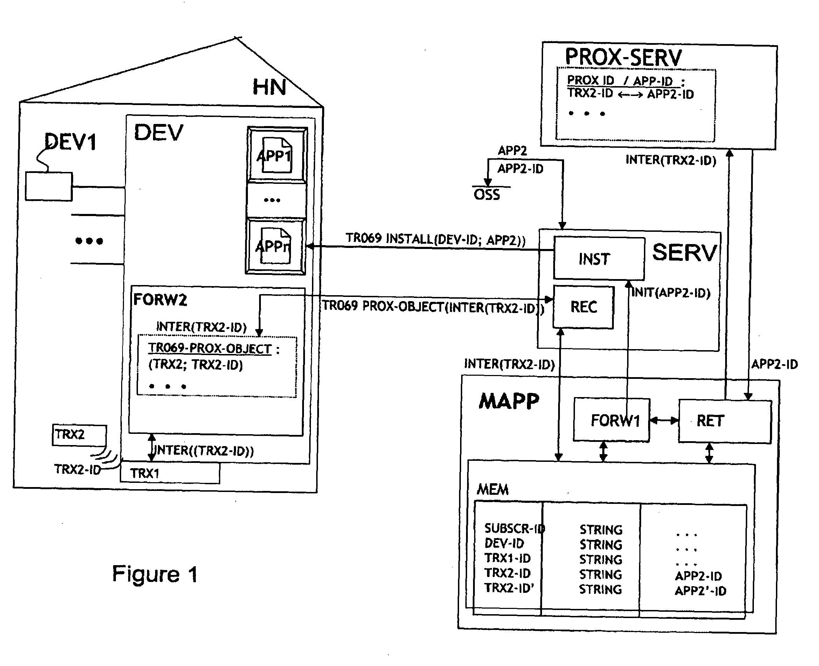

The above and other objects and features of the invention will become more apparent and the invention itself will be best understood by referring to the following description of an embodiment taken in conjunction with the accompanying drawings wherein Figure 1 represents home network in an access telecommunication network.

The working of the device according to the present invention in accordance with its telecommunication environment that is shown in Figure 1 will be explained by means of a functional description of the different blocks shown therein. Based on this description, the practical implementation of the blocks will be obvious to a person skilled in the art and will therefore not be described in details. In parallel, the principle working of the method to for installation of an application will be described in further detail.

Referring to Figure 1 a Home Network in an Access Network is shown.

The Access Network comprises a Home Network HN, a server SERV, a proximity server PROX-SERV and a mapping device MAPP.

The server SERV is implemented by means of an Auto Configuration Server ACS.

The Home Network HN comprises a customer device DEV. According to this present embodiment the customer device is implemented by means of a Service Gateway which is coupled to a plurality of end-user devices such as DEV1 (only one device DEV1 is shown). As remarked above, the customer device can as well be implemented with one of the end-user devices such as a Personal Computer, a sensor or a Set-up box or a Home Gateway, etc.

According to the present description of an embodiment it is preferred to implement the established remote procedure call protocol between the server SERV and the customer device DEV by means of a TR069 Management Protocol.

A first proximity transceiver TRX1 is associated to the customer device DEV. This means that the first proximity transceiver TRX1 is e.g. coupled to the customer device DEV or is inserted into the customer device DEV or is permanently integrated in it etc.

A second proximity transceiver TRX2 is brought in the interaction environment of the customer device DEV. Hereby a proximity based interaction is applied upon the device DEV i.e. communication is enabled between both receivers TRX1 and TRX2. As a consequence of this interaction, interaction information INTER such as e.g. identification information TRX2-ID of the second transceiver is generated. This is shown with INTER(TRX2-ID).

The device DEV further comprises a second forwarder FORW2. The second forwarder FORW2 is coupled to the first transceiver to receive and to eventually temporarily store the interaction information INTER. Furthermore is the second forwarder FORW2 enabled to forward towards the server SERV the interaction information INTER by means of interchanged values for parameters of a proximity-object being defined according to the TR-069 management protocol. This is shown with the TR069-PROX-OBJECT table that comprises e.g. the name of the second transceiver TRX2 and the value of the transceiver identification TRX2-ID; and by means of the arrow between the second forwarder FORW2 and the server SERV with ref. TR069 PROX-OBJECT(INTER(TRX2-ID)).

The device DEV also shows some present applications such as APP1 and APPn.

The server SERV comprises an installer INST to install according to the remote procedure call protocol, the TR-069 management protocol, an application APP2 upon reception of an initiation message INIT. Such an initiation message comprises an application identification APP2-ID that identifies the application APP2 that needs to be installed.

The server SERV also comprises a server receiver REC to receive from the customer device DEV the interaction information INTER by means of interchanged values for parameters of the proximity-object that is defined according to the TR-069 protocol.

It has to be remarked that, although the use of the proximity-object is not essential to realize the basic idea of the present application, it is an efficient and secure way to gather all the data.

It also has to be remarked that according to the actual description of this embodiment, the actual mapping device is described as a stand-alone independent device. However, such a mapping device MAPP might as well be comprised in the server SERV itself or, when using the TR069 terminology, in the Auto configuration Server or in an Application Life Cycle Manager.

The proximity server PROX-SERV is coupled to the mapping device MAPP and returns upon reception of interaction information that comprises an identification of the second transceiver INTER(TRX2-ID), an associated application identification APP2-ID i.e. the second transceiver identification TRX2-ID of the proximity transceiver TRX2 identifies the application that is bought by the subscriber and that needs to be installed at the customer device DEV.

Furthermore, according to this actual described example of the basic idea of the present application, the access network comprises a stand-alone mapping device MAPP which is coupled to the server SERV. The mapping device MAPP comprises the retriever RET and the first forwarder FORW1. As it is made clear above, it has to be remarked that the inclusion in the mapping device MAPP is not the only possible location for these two functional blocks. Indeed the retriever RET and the first forwarder FORWS might as well be comprises in the server itself SERV or in the proximity server PROX-SERV.

The retriever RET is included to retrieve from the proximity server PROX-SERV, based upon interaction information INTER(TRX2-ID), the application identification APP2-ID of the concerned application APP2.

The first forwarder FORW1 is included to forward an initiation message INIT towards the server SERV. The initiation message INIT(APP2-ID) comprises an application identification APP2-ID i.e. the identification of the application that needs to be installed by the server SERV at the device DEV.

The mapping device MAPP also comprises a memory MEM to store an association between the customer device identification DEV-ID, the interaction information INTER and the application identification APP2-ID. Indeed, according to the TR-069 communication between the customer device DEV and the server SERV, the server SERV receives the customer device identification DEV-ID according to the TR-069 protocol and forwards this to the mapping device MAPP to store it in its memory MEM.

According to the present example embodiment it is known that the server SERV also retrieves from the Operating Support System OSS the subscriber identification SUBSCR-ID and that this subscriber identification SUBSCR-ID is also stored in the memory MEM in relation to the customer device identification.

Furthermore, it has to be remarked here that the mapping device MAPP might as well be enabled to store, eventually only temporarily basis, the interaction information INTER that was received by the server SERV from the device DEV and that was forwarded by the server SERV towards the mapping device MAPP. The stored interaction information INTER (See Figure 1 e.g. TRX1 - ID and TRX2-ID) is also stored in relation to the customer device DEV identification and/or to the subscriber identification SUBSCR-ID.

It has to be remarked that the identification of the first transceiver TRX1-ID can be further checked upon its correlation with the corresponding customer device identification DEV-ID. Hereby the mapping device MAPP might abort or reject the further proceeding of the installation process.

Finally, also the identification of the second transceiver TRX2-ID can be checked upon its presence in the memory from a previous storage. This additional control check is an extra security check to avoid that the same application will be installed a second time at another customer device.

Furthermore, the memory MEM is enabled to store, in relation to the previous identifications, also an application identification APP2-ID that identifies an application APP2. This application identification APP2-ID was retrieved by the retriever RET from the proximity server PROX-SERV. The retrieved and stored application identification APP2-ID is also stored in relation to the customer device DEV identification and/or to the subscriber identification

A description of the basic scenario will now be provided.

Presume a user/subscriber who buys from a store a software application package, or a package containing a new hardware application. The package is delivered to the end-user as an RF-id card i.e. the second transceiver TRX2, or the hardware package contains an RF-id card that also comprise the hardware activation. The application installation procedure goes as follows.

The user establishes a contact between the RF-ID i.e. the second transceiver TRX2 and the RF-READER i.e. the first transceiver TRX1. This means a proximity based interaction is applied to the device DEV and that interaction information INTER is generated.

An authentication of the interaction information INTER might be executed at this stage. Hereby the device DEV will retrieve by itself from the proximity server PROX-SERV the application identification APP2-ID i.e. the retriever RET is comprised in the device DEV. Hereby it has to be remarked that the interaction information INTER might comprise the second transceiver identification TRX2-ID as well as an identification for the first transceiver TRX1.

However it is preferred to execute this authentication step at a later stage whereby the complete procedure becomes more efficient for maintenance and diagnostic reasons.

The interaction information INTER is inserted in a TR-069 proximity-object data i.e. TR069-PROX-OBJECT and the server SERV i.e. the Auto Configuration Server is informed of the new interaction information INTER according to interchanged values for parameters of the proximity-object.

It has to be remarked here that also an Application Life Cycle Manager in the network will normally be informed of the new interaction information INTER.

This means that at the network side a unique relationship becomes available between the subscriber identification (retrieved from the OSS), the first transceiver TRX1, the second transceiver TRX2 and the customer device DEV on which the new application needs to be installed.

This unique relationship is stored in the memory MEM of the mapping device MAPP.

The retriever RET of the mapping device MAPP will now retrieve from the proximity server PROX-SERV based upon the second transceiver identification in the interaction information INTER(TRX2-ID) the application identification APP2-ID. In this way the second transceiver identification in the interaction information INTER(TRX2-ID) is authenticated.

Upon reception of the second transceiver identification in the interaction information INTER(TRX2-ID) the proximity server PROX-SERV checks the validity of the second transceiver identification in the interaction information INTER(TRX2-ID) and returns the corresponding application identification APP2-ID.

In order to obtain a higher level of security also the first transceiver identification can be checked upon its validity at the proximity server. Indeed, the association of the first proximity transceiver to the customer device may not be changed as such. This means the first proximity transceiver should not be detached from the customer device for attachment to another one. In order to control this, the first identification of the first proximity transceiver might also be checked by the proximity server PROX-SERV.

The mapping device MAPP stores the application identification APP2-ID also in the memory MEM.

This application identification APP2-ID is used as a unique application reference towards the server SERV.

It is worthwhile to note that this application identification APP2-ID is operator-specific. This allows an operator or a service provider to control which hardware / software application can be installed on their platforms.

The mapping device MAPP informs now the Operation Support System (shown in Figure 1 with OSS) of the fact of a new application installation.

The first forwarder FORW1 of the mapping device MAPP forwards an initiation message INIT(APP2-ID) towards the server SERV whereby the server SERV installs, by using the TR-069 management protocol, the application APP2 according to the application identification APP2-ID.

It can be remarked that in order to support the server SERV i.e. the Auto Configuration Server, the initiation message INIT(APP2-ID) is forwarded towards the server SERV via an Application Life Cycle Manager.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method for installation of an application (APP2) at a customer device (DEV) by a server (SERV) in a remote procedure call protocol environment which is implemented by a TR069 Management protocol **characterized by** that said method comprises:
- defining according to said remote procedure call protocol an object called proximity-object; and
- applying a proximity based interaction at said device (DEV) and providing thereby interaction information (INTER); and
- forwarding by a second forwarder (FORW2) of said customer device (DEV) towards said server (SERV) said interaction information (INTER) by means of interchanged values for parameters of said proximity-object; and
- retrieving by a retriever (RET), based upon said interaction information (INTER), an application identification (APP2-ID), from a proximity server (PROX-SERV); and
- forwarding by a first forwarder (FORW1) an initiation message (INIT) towards said server (SERV) that comprises said application identification (APP2-ID) for initiating said installation; and
- installing by said server (SERV), upon reception of said initiation message (INIT), and according to said remote procedure call protocol, said application (APP2) according to said application identification (APP2-ID), on said customer device (DEV)

2. The method for installation of an application (APP2) according to claim 1, **characterized in that** said method comprises storing by a mapping device (MAPP) an association between said customer device identification (DEV-ID), said interaction information (INTER) and said application identification (APP2-ID).

3. The method for installation of an application (APP2) according to claim 1, **characterized in that** said step of retrieving being executed by said server (SERV).

4. The method for installation of an application (APP2) according to claim 1 and claim 2, **characterized in that** said step of retrieving and said step of forwarding said initiation message being executed by said mapping device (MAPP).

5. A customer device (DEV) for installation of an application (APP2) being imposed by a server (SERV) by means of a remote procedure call protocol, which is implemented by a TR069 Management protocol **characterized by** that a proximity based interaction being applied upon said customer device (DEV) whereby said customer device provides interaction information (INTER), said device comprises a second forwarder (FORW2) to forward towards said server (SERV) said interaction information (INTER) by means of interchanged values for parameters of a proximity-object which is defined according to said remote procedure call protocol for such interaction, said interaction information (INTER) thereby identifies said application (APP2) for said server (SERV) to impose said installation according to said remote procedure call protocol.

6. A mapping device (MAPP) for use during installation of an application (APP2) at a customer device (DEV) by a server (SERV), said customer device and said server communicating according to a remote procedure call protocol, which is implemented by a TR069 Management protocol, said mapping device comprises a memory (MEM) to store customer device identification according to said remote procedure call, **characterized in that** said memory (MEM) is further enabled to store an application identification (APP2-ID) which identifies said application (APP2), said application identification (APP2-ID) being retrieved, from a proximity server (PROX-SERV), based upon interaction information (INTER) provided by a proximity based interaction at said device (DEV)and forwarded by means of interchanged values for parameters of a proximity-object which is defined according to said remote procedure call protocol for such interaction.

7. The mapping device (MAPP) of claim 6, **characterized in that** said mapping device (MAPP) comprises a retriever (RET) to retrieve said application identification (APP2-ID).

8. The mapping device (MAPP) of claim 6, **characterized in that** said mapping device (MAPP) comprises a first forwarder (FORW1) to forward an initiation message (INIT(APP2-ID)) that comprises said application identification (APP2-ID), to said server for initiating said installation.

9. A server (SERV) for installation of an application (APP2) at a customer device (DEV) according to a remote procedure call protocol, which is implemented by a TR069 Management protocol,
**characterized by** that said server comprises
a server receiver (REC) to receive from said customer device (DEV) interaction information (INTER) by means of interchanged values for parameters of a proximity-object which is defined according to said remote procedure call protocol for such interaction, said interaction information (INTER) is provided by a proximity based interaction at said device (DEV); and
an installer (INST) to install according to said remote procedure call protocol said application (APP2) upon reception of an initiation message (INIT) that comprises an application identification (APP2-ID) which identifies said application (APP2), said application identification (APP2-ID) being retrieved, from a proximity server (PROX-SERV), based upon said interaction information (INTER).

10. The server for installation of an application (APP2) according to 9, **characterized in that** said server comprises a mapping device (MAPP) according to anyone of said claim 6, 7 and 8.

## Patentansprüche

1. Verfahren zur Installation einer Anwendung (APP2) an einem Kundengerät (DEV) durch einen Server (SERV) in einer Fernprozeduraufruf-Protokoll-Umgebung, welche von einem TR-069-Managementprotokoll implementiert wird, **dadurch gekennzeichnet, dass** das besagte Verfahren umfasst:
- Definieren, gemäß dem besagten Fernprozeduraufruf-Protokoll, eines Objektes, Näherungsobjekt genannt; und
- Anwenden einer näherungsbasierten Interaktion an dem besagten Gerät (DEV) und dadurch Bereitstellen von Interaktionsinformationen (INTER); und
- Weiterleiten, durch eine zweite Weiterleitungseinrichtung (FORW2) des besagten Kundengeräts (DEV), der besagten Interaktionsinformationen (INTER) an den besagten Server (SERV) mittels ausgetauschter Werte für Parameter des besagten Näherungsobjektes; und
- Abrufen, durch eine Abrufeinrichtung (RET), auf der Basis der besagten Interaktionsinformationen (INTER), einer Anwendungskennung (APP2-ID) von einem Proximity-Server (PROX-SERV); und
- Weiterleiten, durch eine erste Weiterleitungseinrichtung (FORW2), einer Initiierungsnachricht (INIT), welche die besagte Anwendungskennung (APP2-ID) enthält, an den besagten Server (SERV), um die besagte Installation zu initiieren; und
- Installieren, durch den besagten Server (SERV), nach Empfang der besagten Initiierungsnachricht (INIT) und gemäß dem besagten Fernprozeduraufruf-Protokoll, der besagten Anwendung (APP2) gemäß der besagten Anwendungskennung (APP2-ID) auf dem besagten Kundengerät (DEV).

2. Verfahren zur Installation einer Anwendung (APP2) nach Anspruch 1, **dadurch gekennzeichnet, dass** das besagte Verfahren das Speichern, durch eine Abbildungsvorrichtung (MAPP), einer Assoziation zwischen der Kennung des besagten Kundengeräts (DEV-ID), den besagten Interaktionsinformationen (INTER) und der besagten Anwendungskennung (APP2-ID) umfasst.

3. Verfahren zur Installation einer Anwendung (APP2) nach Anspruch 1 und 2, **dadurch gekennzeichnet, dass** der besagte Schritt des Abrufens von dem besagten Server (SERV) durchgeführt wird.

4. Verfahren zur Installation einer Anwendung (APP2) nach Anspruch 1 und 2, **dadurch gekennzeichnet, dass** der besagte Schritt des Abrufens und der besagte Schritt des Weiterleitens der besagten Initüerungsnachricht von der besagten Abbildungsvorrichtung (MAPP) durchgeführt werden.

5. Kundengerät (DEV) zur Installation einer von einem Server (SERV) auferlegten Anwendung (APP2) mittels eines Fernprozeduraufruf-Protokolls, welches von einem TR-069-Managementprotokoll implementiert wird, **dadurch gekennzeichnet, dass** eine näherungsbasierte Interaktion auf dem besagten Kundengerät (DEV) angewendet wird, wodurch das besagte Kundengerät Interaktionsinformationen (INTER) bereitstellt, wobei das besagte Gerät eine zweite Weiterleitungseinrichtung (FORW2) umfasst, um die besagten Interaktionsinformationen (INTER) mittels ausgetauschter Werte für Parameter eines Näherungsobjektes, welches gemäß dem besagten Fernprozeduraufruf-Protokoll für eine solche Interaktion definiert wird, an den besagten Server (SERV) weiterzuleiten, wobei die besagten Interaktionsinformationen (INTER) dadurch die besagte Anwendung (APP2) identifiziert, damit der besagte Server (SERV) die besagte Installation gemäß dem besagten Fernprozeduraufruf-Protokoll auferlegt.

6. Abbildungsvorrichtung (MAPP) zur Verwendung während der Installation einer Anwendung (APP2) an einem Kundengerät (DEV) durch einen Server (SERV), wobei das besagte Kundengerät und der besagte Server gemäß einem Fernprozeduraufruf-Protokoll, welches von einem TR-069-Managementprotokoll implementiert wird, kommunizieren, wobei die besagte Abbildungsvorrichtung einen Speicher (MEM) zum Speichern der Kennung von Kundengeräten gemäß dem besagten Fernprozeduraufruf umfasst, **dadurch gekennzeichnet, dass** der besagte Speicher (MEM) weiterhin befähigt ist, eine Anwendungskennung (APP2-ID), welche die besagte Anwendung (APP2) identifiziert, zu speichern, wobei die besagte Anwendungskennung (APP2-ID) auf der Basis von von einer näherungsbasierten Interaktion an dem besagten Gerät (DEV) bereitgestellten Interaktionsinformationen (INTER) von einem Proximity-Server (PROX-SERV) abgerufen und mittels ausgetauschter Werte für Parameter eines Näherungsobjektes, welches gemäß dem besagten Fernprozeduraufruf-Protokoll für eine solche Interaktion definiert wird, weitergeleitet wird.

7. Abbildungsvorrichtung (MAPP) nach Anspruch 6, **dadurch gekennzeichnet, dass** die besagte Abbildungsvorrichtung (MAPP) eine Abrufeinrichtung (RET) zum Abrufen der besagten Anwendungskennung (APP2-ID) umfasst.

8. Abbildungsvorrichtung (MAPP) nach Anspruch 6, **dadurch gekennzeichnet, dass** die besagte Abbildungsvorrichtung (MAPP) eine erste Weiterleitungseinrichtung (FORW1) zum Weiterleiten einer Initiierungsnachricht (INIT(APP2-ID)), welche die besagte Anwendungskennung (APP2-ID) enthält, an den besagten Server zur Initiierung der besagten Installation umfasst.

9. Server (SERV) zur Installation einer Anwendung (APP2) an einem Kundengerät (DEV) gemäß einem Fernprozeduraufruf-Protokoll, welches von einem TR-069-Managementprotokoll implementiert wird,
**dadurch gekennzeichnet, dass** der besagte Server umfasst:
Einen Serverempfänger (REC) für den Empfang von Interaktionsinformationen (INTER) mittels ausgetauschter Werte für Parameter eines Näherungsobjektes, welches gemäß dem besagten Fernprozeduraufruf-Protokoll für eine solche Interaktion definiert wird, von dem besagten Kundengerät (DEV), wobei die besagten Interaktionsinformationen (INTER) durch eine näherungsbasierte Interaktion an dem besagten Gerät (DEV) bereitgestellt werden; und
eine Installationseinrichtung (INST) für die Installation der besagten Anwendung (APP2) gemäß dem besagten Fernprozeduraufruf-Protokoll nach Empfang einer Initiierungsnachricht (INIT), die eine Anwendungskennung (APP2-ID), welche die besagte Anwendung (APP2) identifiziert, enthält, wobei die besagte Anwendungskennung (APP2-ID) auf der Basis der besagten Interaktionsinformationen (INTER) von einem Proximity-Server (PROX-SERV) abgerufen wird.

10. Server zur Installation einer Anwendung (APP2) nach Anspruch 9, **dadurch gekennzeichnet, dass** der besagte Server eine Abbildungsvorrichtung (MAPP) gemäß einem beliebigen der Ansprüche 6, 7 und 8 umfasst.

## Revendications

1. Procédé d'installation d'une application (APP2) sur un appareil d'abonné (DEV) par un serveur (SERV) dans un environnement de protocole d'appel de procédure à distance qui est mis en oeuvre par un protocole de gestion TR069, **caractérisé en ce que** le procédé comprend :
- définition, conformément audit protocole d'appel de procédure à distance, d'un objet appelé objet de proximité ; et
- application d'une interaction basée sur la proximité audit appareil (DEV) et production à cette occasion d'informations d'interaction (INTER) ; et
- transfert, par un deuxième transitaire (FORW2) dudit appareil d'abonné (DEV) vers ledit serveur (SERV) desdites informations d'interaction (INTER) au moyen de valeurs échangées pour les paramètres dudit objet de proximité ; et
- récupération, par un récupérateur (RET), en se basant sur lesdites informations d'interaction (INTER), d'une identification d'application (APP2-ID) auprès d'un serveur de proximité (PROX-SERV) ; et
- transfert, par un premier transitaire (FORW1) vers ledit serveur (SERV), d'un message d'initiation (INIT) qui comprend ladite identification d'application (APP2-ID) pour initier ladite installation ; et
- installation par ledit serveur (SERV), sur réception dudit message d'initiation (INIT) et conformément audit protocole d'appel de procédure à distance, de ladite application (APP2) conformément à ladite identification d'application (APP2-ID) sur ledit appareil d'abonné (DEV).

2. Procédé d'installation d'une application (APP2) selon la revendication 1, **caractérisé en ce que** ledit procédé comprend le stockage par un dispositif de mise en correspondance (MAPP) d'une association entre l'identification dudit appareil d'abonné (DEV-ID), desdites informations d'interaction (INTER) et de ladite identification d'application (APP2-ID).

3. Procédé d'installation d'une application (APP2) selon la revendication 1, **caractérisé en ce que** ladite étape de récupération est exécutée par ledit serveur (SERV).

4. Procédé d'installation d'une application (APP2) selon la revendication 1 ou 2, **caractérisé en ce que** ladite étape de récupération et ladite étape de transfert dudit message d'initiation sont exécutées par ledit dispositif de mise en correspondance (MAPP).

5. Appareil d'abonné (DEV) pour l'installation d'une application (APP2) qui est imposée par un serveur (SERV) au moyen d'un protocole d'appel de procédure à distance qui est mis en oeuvre par un protocole de gestion TR069, **caractérisé en ce qu'**une interaction basée sur la proximité est appliquée audit appareil d'abonné (DEV), au cours de laquelle ledit appareil d'abonné produit des informations d'interaction (INTER), ledit appareil d'abonné comprend un deuxième transitaire (FORW2) pour transférer vers ledit serveur (SERV) lesdites informations d'interaction (INTER) au moyen de valeurs échangées pour les paramètres d'un objet de proximité qui est défini conformément audit protocole d'appel de procédure à distance pour une telle interaction, lesdites informations d'interaction (INTER) identifiant ci ladite application (APP2) pour ledit serveur (SERV) afin d'imposer ladite installation conformément audit protocole d'appel de procédure à distance.

6. Dispositif de mise en correspondance (MAPP) à utiliser pendant l'installation d'une application (APP2) sur un appareil d'abonné (DEV) par un serveur (SERV), ledit appareil d'abonné et ledit serveur communiquant conformément à un protocole d'appel de procédure à distance qui est mis en oeuvre par un protocole de gestion TR069, ledit dispositif de mise en correspondance comprenant une mémoire (MEM) pour stocker l'identification de l'appareil d'abonné conformément audit protocole d'appel de procédure à distance, **caractérisé en ce que** ladite mémoire (MEM) est en outre capable de stocker une identification d'application (APP2-ID) qui identifie ladite application (APP2), ladite identification d'application (APP2-ID) étant récupérée par un serveur de proximité (PROX-SERV) en se basant sur des informations d'interaction (INTER) produites par une interaction basée sur la proximité sur ledit appareil (DEV) et transférées au moyen de valeurs échangées pour les paramètres d'un objet de proximité qui est défini conformément audit protocole d'appel de procédure à distance pour une telle interaction.

7. Dispositif de mise en correspondance (MAPP) selon la revendication 6, **caractérisé en ce que** ledit dispositif de mise en correspondance (MAPP) comprend un dispositif de récupération (RET) pour récupérer ladite identification d'application (APP2-ID).

8. Dispositif de mise en correspondance (MAPP) selon la revendication 6, **caractérisé en ce que** ledit dispositif de mise en correspondance (MAPP) comprend un premier transitaire (FORW1) pour transférer un message d'initiation (INIT(APP2-ID)) qui comprend ladite identification d'application (APP2-ID) audit serveur afin d'initier ladite installation.

9. Serveur (SERV) pour l'installation d'une application (APP2) sur un appareil d'abonné (DEV) conformément à un protocole d'appel de procédure à distance qui est mis en oeuvre par un protocole de gestion TR069,
**caractérisé en ce que** ledit serveur comprend :
un récepteur de serveur (REC) pour recevoir de la part dudit appareil d'abonné (DEV) des informations d'interaction (INTER) au moyen de valeurs échangées pour les paramètres d'un objet de proximité qui est défini conformément audit protocole d'appel de procédure à distance pour une telle interaction, lesdites informations d'interaction (INTER) étant produites par une interaction basée sur la proximité sur ledit appareil (DEV) ; et
un installeur (INST) pour installer, conformément audit protocole d'appel de procédure à distance, ladite application (APP2) sur réception d'un message d'initiation (INIT) qui comprend une identification d'application (APP2-ID) qui identifie ladite application (APP2), ladite identification d'application (APP2-ID) étant récupérée auprès d'un serveur de proximité (PROX-SERV) en se basant sur lesdites informations d'interaction (INTER).

10. Serveur pour l'installation d'une application (APP2) selon la revendication 9, **caractérisé en ce que** ledit serveur comprend un dispositif de mise en correspondance (MAPP) selon l'une quelconque desdites revendications 6, 7 et 8.
